# EUROPÄISCHE PATENTANMELDUNG

(11) **EP 0 698 569 A1**
(43) Veröffentlichungstag der Anmeldung: **28.02.1996**
(21) Anmeldenummer: 95112987.3
(22) Anmeldetag: 18.08.1995
(51) Int. Cl.: B65G 47/248

(54) **Einrichtung zum Wenden von Gegenständen auf einer Transportstrecke, insbesondere zum Wenden von Dosendeckeln und Dosen u.dgl.**

(30) Priorität: 24.08.1994 DE 9413617 U; 05.10.1994 DE 9416044 U
(71) Anmelder: NSM MAGNETTECHNIK GMBH, D-59399 Olfen (DE)
(72) Erfinder: Langenberg, Josef, D-59387 Ascheberg-Herbern (DE); Kulik, Gerhard, D-59439 Holzwickede (DE)
(74) Vertreter: Vollbach, Hans, Dipl.-Ing.

(57) **Zusammenfassung**

Die Erfindung betrifft eine Einrichtung zum Wenden von Dosen oder Dosendeckeln oder sonstigen Teilen und weist zu diesem Zweck einen Wendeförderer (1) auf, dessen angetriebenes endloses Förderband (2) zwischen Umlenkrollen etwa schleifenförmig geführt und in seiner Längsrichtung um etwa 180° in sich verdreht ist, wobei dem Förderband eine Haltevorrichtung zur Halterung der Gegenstände (7) an ihm während des Transport- und Wendevorgangs zugeordnet ist. Vorzugsweise besteht der Wendeförderer (1) aus einem Klemmwendeförderer, dessen Förderband so ausgeführt ist, daß es zwei gleichsinnig in sich um 180° verdrehte und gleichgerichtet fördernde Bandtrume (2''', 2'''') aufweist, die als Haltevorrichtung einen der Klemmhalterung der zu wendenden Gegenstände (7) dienenden Klemmtransportspalt (22) bilden.

## Beschreibung

Die Erfindung betrifft eine Einrichtung zum Wenden von Gegenständen, wie insbesondere Dosen oder Dosendeckeln, um etwa 180° auf einer Transportstrecke.

In der Praxis stellt sich häufig das Problem, innerhalb einer Produktions- oder Verarbeitungslinie Gegenstände um 180° zu wenden. Beispielsweise müssen in der Verpackungsindustrie Dosen gewendet werden, um diese auf ihrer Unter- bzw. Bodenseite z.B. mit einer Markierung, Einprägung, einem Aufdruck od.dgl. zu versehen. Dosendeckel müssen vielfach nach dem Einbringen einer Gummierung in den Deckelfalz ihrer Verschlußseite gewendet werden, um auf ihrer Oberseite z.B. eine Kennzeichnung aufzubringen.

Zum Wenden von Gegenständen sind in der Industrie Wendeeinrichtungen unterschiedlicher Art bekannt, z.B. Drehgreifer oder Vorrichtungen, die mit Umlenktaschen, Umlenkrollen oder Wendetwisten arbeiten. Bei den bekannten Wendeeinrichtungen werden die zu wendenden Teile entweder im Förderfluß stark abgebremst oder sogar abgestoppt, worauf die Fahrtrichtung gedreht wird.

Aufgabe der Erfindung ist es, eine Wendeeinrichtung zu schaffen, mit der sich insbesondere als Massenerzeugnisse hergestellte bzw. zu verarbeitende Gegenstände, wie vorzugsweise Dosen oder Dosendeckel, auch im kontinuierlichen Transportfluß um 180° sicher wenden lassen.

Diese Aufgabe wird erfindungsgemäß dadurch gelöst, daß die Wendeeinrichtung von einem Wendeförderer gebildet ist, dessen endloses Förderband zwischen Umlenkrollen od.dgl. etwa schleifenförmig geführt und in seiner Längsrichtung um etwa 180° in sich verdreht ist, wobei dem Förderband eine Haltevorrichtung zur Halterung der Gegenstände an ihm während des Transport- und Wendevorgangs zugeordnet ist.

Nach der Erfindung wird für das 180°-Wenden der Gegenstände ein Wendeförderer mit einem um Umlenkrollen od.dgl. umlaufenden endlosen Förderband verwendet, das zwischen den Umlenkrollen um 180° in sich verdreht ist, so daß es zwischen den Umlenkrollen, von denen zumindest eine angetrieben ist, etwa schleifenförmig geführt ist. Mit einem solchen Wendeförderer lassen sich Dosen oder Dosendeckel wie auch andere Teile innerhalb einer Produktions- und Verarbeitungslinie od.dgl. im kontinuierlichen Transportfluß um 180° wenden, ohne daß dabei die zu wendenden Teile um eine Umlenkrolle des Wendeförderers herumgeführt werden müssen. Um sicherzustellen, daß die Gegenstände auf der Transport- und Wendestrecke am Förderband fixiert bleiben, also nicht von diesem abfallen, ist dem Förderband des Wendeförderers eine Haltevorrichtung zur Halterung der Gegenstände an ihm zugeordnet. Der erfindungsgemäße Wendeförderer zeichnet sich durch vergleichsweise einfache Bauweise aus. Er ist in der Lage, bei allen in der Praxis geforderten Linienleistungen zu arbeiten. Er kann auch nachträglich noch in bestehende Produktions- oder Verarbeitungslinien u.dgl. eingebaut werden.

Die vorgenannte Haltevorrichtung kann von unterschiedlicher Ausbildung sein und z.B. auch aus am flexiblen Förderband selbst angeordneten Halteelementen, wie z.B. Haltetaschen od.dgl. bestehen. Bei ferromagnetischen Gegenständen, wie vor allem Dosen oder Dosendeckeln, kann für die Haltevorrichtung ein, vorzugsweise permanentmagnetisches, Magnetsystem vorgesehen werden. In diesem Fall wird für den Wendeförderer vorzugsweise ein Magnetbandförderer verwendet, wobei die Haltevorrichtung von dem zwischen den beiden Bandtrumen des flexiblen Förderbandes angeordneten Magnetsystem gebildet ist. Magnetbandföderer sind an sich bekannt. Im vorliegenden Fall ist aber das Magnetsystem dem in sich verdrehten Förderband des Magnetbandförderers zugeordnet. Das Magnetsystem besteht hierbei zweckmäßig aus einer sich über die Wendestrecke erstreckenden, mit Magneten bestückten und entsprechend der Verdrehung des Förderbandes geformten Leiste od.dgl..

Insbesondere bei nicht-ferromagnetischen Gegenständen, wie z.B. solchen aus Kunststoff, Aluminium, Kupfer, Edelstahl u.dgl., kann die Halterung der Gegenstände am Förderband durch Saugwirkung, also mit Hilfe eines Vakuums, erfolgen. Der Wendeförderer besteht hierbei aus einem Saugbandförderer, wobei die Haltevorrichtung von einem zwischen den beiden Bandtrumen des Förderbandes angeordneten, mit Ansaugöffnungen versehenen Vakuumrohr od.dgl. gebildet ist. Das Förderband ist hierbei mit dem Vakuumrohr zugeordneten Durchbrechungen bzw. Saugöffnungen versehen. Das Vakuumrohr wird so angeordnet, daß es dem Verlauf des in sich verdrehten Förderbandtrums folgt, wobei seine Ansaugöffnungen über die Transport- und Wendestrecke stets dem Förderbandtrum zugewandt sind.

Bei einer bevorzugten Ausführungsform der Erfindung, bei der es keiner bauaufwendigen Haltevorrichtung zur Halterung der Gegenstände am Förderband auf der Transport- und Wendestrecke bedarf, besteht der Wendeförderer aus einem Klemmwendeförderer mit gleichsinnig in sich um 180° verdrehten und gleichgerichtet von der Aufgabeseite zur Austragsseite laufenden Bandtrumen, die als Haltevorrichtung einen der Klemmhalterung der zu wendenden Gegenstände dienenden Klemmtransportspalt bilden. Bei einem solchen Klemmwendeförderer werden die zu wendenden Gegenstände, wie vor allem Dosendeckel und Dosen oder sonstige Teile, wie vor allem scheibenartige Teile, auf der Wende- und Transportstrecke zwischen zwei angetriebenen fördernden Bandtrumen mit Klemmung gehalten, die gleichsinnig zueinander jeweils um etwa 180° in sich verdreht sind und sich synchron über die Wende- und Transportstrecke bewegen. Da die zu wendenden Gegenstände somit auf der Wende- und Transportstecke durch Klemmung sichergehalten werden, kann der Klemmwendeförderer mit hoher Arbeitsgeschwindigkeit und folglich hoher Durchsatzleistung kontinuierlich arbeiten. Er ist in der Lage, bei allen in der Praxis geforderten Linienleistungen zu arbeiten. Er kann auch nachträglich noch in bestehende Produktions- oder Verarbeitungslinien od.dgl. eingebaut werden.

Der erfindungsgemäße Klemmwendeförderer läßt sich in unterschiedlicher Weise ausbilden. Bei einer bevorzugten Ausführungsform der Erfindung ist das endlose Förderband des Klemmwendeförderers zwischen den aufgabeseitigen und den austragsseitigen Umlenkrollen mehrfach schleifenförmig derart umgelenkt, daß zwei seiner gleichsinnig in sich verdrehten und gleichgerichtet von der Aufgabeseite zur Austragsseite laufende benachbarte Bandtrume gemeinsam den die zu wendenden Gegenstände mit Klemmung haltenden gewendelten Klemmtransportspalt bilden bzw. begrenzen. Das den Klemmwendeförderer bildende endlose flexible Förderband ist bei dieser Ausführung also über Umlenkrollen mehrfach schleifenförmig umgelenkt, so daß es zwei den Klemmtransportspalt bildende Bandtrume aufweist, in dem die Gegenstände auf der Wende- und Transportstrecke zwischen der Aufgabeseite und der Austragsseite des Klemmwendeförderers um 180° gewendet werden. Dabei wird die Anordnung vorteilhafterweise so getroffen, daß das endlose Förderband an der Aufgabe- und Austragsseite jeweils über im Abstand zueinander angeordnete Umlenkrollen unter Bildung von vier Bandtrumen schleifenförmig geführt ist, wobei die beiden benachbarten, innenliegenden Bandtrume zur Bildung des Klemmtransportspaltes jeweils gleichgerichtet zueinander in sich verdreht sind, während die beiden äußeren Bandtrume die nicht in sich verdrehten, von der Austragsseite zur Aufgabeseite zurücklaufenden Rücklauftrume des endlosen Förderbandes bilden. Vorzugsweise sind die Umlenkrollen an der Aufgabe- und Austragsseite des Klemmwendeförderers im Abstand übereinander angeordnet. Das bedeutet, daß der Klemmwendeförderer als Horizontalförderer oder aber als in der Vertikalebene geneigter Wendeförderer arbeitet.

Es empfiehlt sich, am Aufgabeende des Wendeförderers eine die zu wendenden Gegenstände dem Wendeförderer, vorzugsweise kontinuierlich, zuführende Zuführvorrichtung und am Übergabeende des Wendeförderers eine die gewendeten Gegenstände übernehmende Abführvorrichtung anzuordnen. Für die Zuführvorrichtung kann ein angetriebenes Zuführband verwendet werden, mit dem eine kontinuierliche Beschickung des Wendeförderers möglich ist. Für das Zuführband kann ein die zu wendenden Gegenstände auf seinem Obertrum förderndes Förderband verwendet werden, aber auch ein Förderband, welches die zu wendenden Gegenstände an seinem Untertrum hängend transportiert und in diesem Fall als Magnet- oder Saugband ausgebildet ist. Die Zuführung der zu wendenden Gegenstände und deren Übergabe an den Wendeförderer kann aber auch mit Hilfe anderer Zuführvorrichtungen erreicht werden, z.B. über einen Zuführtisch, eine geneigte Gleitplatte, eine Totrutsche od.dgl.. Für die genannte Abführvorrichtung kann mit Vorteil ein die gewendeten Gegenstände von dem Wendeförderer übernehmender Abführförderer, vorzugsweise in Gestalt eines endlosen angetriebenen Förderbandes, verwendet werden, obwohl auch hier unterschiedliche Gestaltungsformen möglich sind.

Weitere vorteilhafte Gestaltungsmerkmale der Erfindung sind in den einzelnen Ansprüchen angegeben und ergeben sich aus der nachfolgenden Beschreibung der in der Zeichnung gezeigten Ausführungsbeispiele. In der Zeichnung zeigen:
- Fig. 1: in Seitenansicht eine erfindungsgemäße Wendeeinrichtung mit dem Wendeförderer, der zugeordneten Zuführvorrichtung und Abführvorrichtung;
- Fig. 2: den Wendeförderer nach Fig. 1 in seinem Aufgabebereich zusammen mit einer geänderten Zuführvorrichtung;
- Fig. 3A bis 3E: Vertikalschnitte nach den Linien IIIA-IIIA bis IIIE-IIIE der Fig. 1;
- Fig. 4: einen Teilabschnitt des Wendeförderers nach Fig. 1, der hier als Vakuum- bzw. Saugbandförderer ausgeführt ist, in perspektivischer Darstellung;
- Fig. 5: in Seitenansicht eine weitere, bevorzugte Ausführungsform einer erfindungsgemäßen Wendeeinrichtung mit einem als Klemmwendeförderer ausgebildeten Wendeförderer,
- Fig. 6: einen Horizontalschnitt nach Linie VI-VI der Fig. 5;
- Fig.7-11: jeweils einen Vertikalschnitt nach Linie VII-VII, VIII-VIII, IX-IX, X-X und XI-XI der Fig. 5.

Die in der Zeichnung gezeigten Wendeeinrichtungen dienen, wie erwähnt, bevorzugt für das 180°-Wenden von Dosen oder Dosendeckeln innerhalb einer Transportlinie, können aber auch für das Wenden anderer Teile, insbesondere kleinteiliger Massenteile, Flachteile u.dgl. verwendet werden.

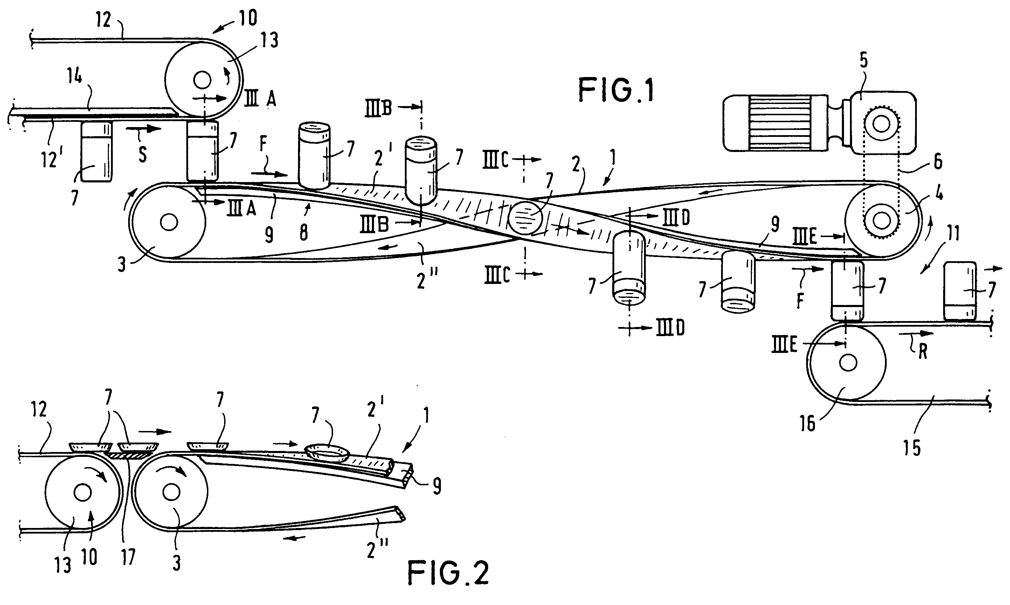

Die in den Fig. 1 bis 4 gezeigte Wendeeinrichtung weist einen Wendeförderer 1 auf, dessen endloses flexibles Förderband 2 um Umlenkrollen 3 und 4 od.dgl. umläuft, von denen zumindest die eine Umlenkrolle, gemäß Fig. 1 die an der Austragsseite des Wendeförderers 1 angeordnete Umlenkrolle 4 über einen Bandantrieb 5 angetrieben ist, der aus einer Motor- und Getriebeeinheit besteht. Im gezeigten Ausführungsbeispiel ist der Bandantrieb 5 oberhalb der austragsseitigen Umlenkrolle 4 an einem nichtdargestellten Antriebsträger angeordnet, wobei der Antrieb über eine endlose Antriebskette 6 od.dgl. erfolgt.

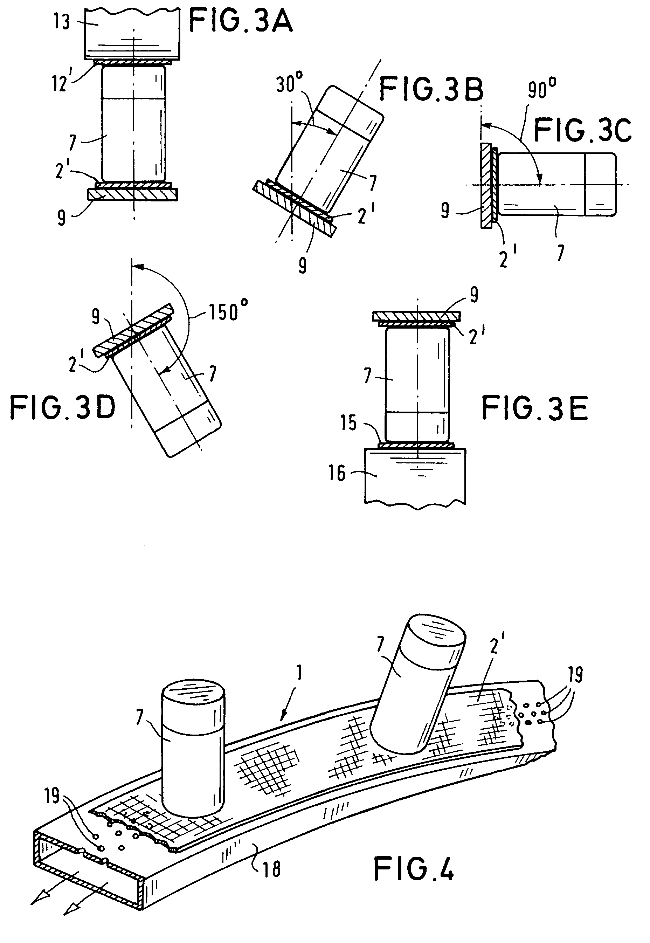

Wie Fig. 1 deutlich erkennen läßt, sind beide Bandtrume 2' und 2'' des endlosen Förderbandes 2 auf der Transport- und Wendestrecke zwischen den beiden Umlenkrollen 3 und 4 jeweils um 180° in sich verdreht, so daß sich ein schleifenförmiger Verlauf des endlosen Förderbandes 2 ergibt, wobei sich die beiden Bandtrume 2' und 2'' in der Mitte zwischen den Umlenkrollen 3 und 4 kreuzen. Die Drehrichtung der beiden Umlenkrollen 3 und 4 ist in Fig. 1 durch Pfeile angegeben. Das von der aufgabeseitigen Umlenkrolle 3 oben ablaufende Bandtrum 2' ist in seinem Verlauf zu der austragsseitigen Umlenkrolle 4 hin kontinuierlich in seiner Längsrichtung in sich verdreht, so daß es in der Mitte zwischen den beiden Umlenkrollen 3 und 4 etwa vertikal steht, wie dies auch in Fig. 3C gezeigt ist, und im weiteren Verlauf zu der Umlenkrolle 4 hin bis in den Horizontalverlauf weiter verdreht ist und somit im Horizontalverlauf von unten der Umlenkrolle 4 zuläuft. Gleiches gilt sinngemäß für das andere Bandtrum 2'', welches das Leertrum des endlosen Förderbandes bildet. Die verschiedenen Drehlagen des Förderbandes bzw. seines fördernden Bandtrums 2' sind in den Fig. 3A bis 3E gezeigt. Es ist erkennbar, daß das Förderband mit beiden Bandtrumen 2' und 2'' auf der Transport- und Wendestrecke zwischen den beiden Umkehrrollen 3 und 4 um 180° in sich verdreht ist. Die Förderrichtung des Wendeförderers ist in Fig. 1 durch die Pfeile F angegeben.

Die in den Fig. 1, 3A bis 3E und Fig. 4 mit 7 bezeichneten Gegenstände, die auf der Transport- und Wendestrecke zwischen den beiden Umkehrrollen 3 und 4 um 180° gewendet werden, bestehen aus Dosen, die aus Blech, also einem ferromagnetischen Material gefertigt sind. Um die Dosen 7 auf der Transport- und Wendestrecke am Förderband 2 bzw. dessen Bandtrum 2' in ihrer Lage zu fixieren und damit ein Abfallen der Dosen 7 vom Förderband zu verhindern, ist dem Wendeförderer eine Haltevorrichtung zugeordnet. Zu diesem Zweck ist der Wendeförderer 1 als Magnetbandförderer ausgebildet, wobei die Haltevorrichtung von dem zwischen den beiden Bandtrumen 2' und 2'' angeordneten Magnetsystem 8 gebildet ist. Dieses besteht aus einer in dichtem Abstand zu dem fördernden Bandtrum 2' angeordneten, mit Magneten, insbesondere Permanentmagneten, bestückten Leiste 9, die entsprechend der Verdrehung des Bandtrumes 2' geformt bzw. in sich verdreht ist und sich über die gesamte Wendestrecke zwischen den Umkehrrollen 3 und 4 erstreckt und sich dem Verlauf des Bandtrumes 2' eng anpaßt, so daß die Dosen 7 von ihrer Aufgabestelle im Bereich der Umkehrrolle 3 zu ihrer Abgabestelle im Bereich der Umkehrrolle 4 am Bandtrum 2' magnetisch gehalten werden. Magentbandförderer sind an sich bekannt, so daß sich die Erläuterung des Magnetsystems erübrigen kann.

Am Aufgabeende des Wendeförderers 1 ist eine die zu wendenden Gegenstände 7 dem Wendeförderer, vorzugsweise kontinuierlich, zuführende Zuführvorrichtung 10 und am Übergabeende des Wendeförderers 1 eine die gewendeten Gegenstände 7 übernehmende Abführvorrichtung 11 angeordnet. Die Zuführvorrichtung besteht bei dem Ausführungsbeispiel nach Fig. 1 aus einem angetriebenen endlosen Zuführband 12, hier einem Horizontalband, dessen in der angegebenen Pfeilrichtung umlaufende, ggf. angetriebene Umlenkrolle 13 im Abstand oberhalb der Umlenkrolle 3 und des von dieser ablaufenden Bandtrums 2' angeordnet ist. Das Zuführband 12 besteht aus einem an sich bekannten Magnetbandförderer, dessen fördernden Untertrum 12' eine Magnetleiste 14 zugeordnet ist.

Die zu wendenden Gegenstände 7 werden daher an dem Untertrum 12' magnetisch hängend in Pfeilrichtung S dem Wendeförderer 1 zugeführt und hier an der Umlenkrolle 13 mit ihrer Unterseite dem von der Umkehrrolle 3 in Flach- bzw. Horizontallage ablaufenden Bandtrum 2' des Förderbandes 2 übergeben, wie dies in den Fig. 1 und 3A gezeigt ist. Die so dem Wendeförderer 1 in rascher Taktfolge aufgegebenen Gegenstände bzw. Dosen 7 werden am Bandtrum 2' des Förderbandes 2 magnetisch gehalten und vom Förderband 2 in Pfeilrichtung F zur Umlenkrolle 4 hin befördert, wobei sie aufgrund der Verdrillung des Förderbandes 2 auf der Transportstrecke kontinuierlich um 180° gedreht werden, so daß sie sich im Bereich der austragsseitigen Umkehrrolle 4 in ihrer Wendelage befinden, in der ihre Kopfseite nach unten weist. In dieser Wendelage werden die Dosen 7 der Abführvorrichtung 11 übergeben. Diese besteht aus einem Abführförderer in Gestalt eines endlosen Förderbandes 15, dessen Umkehrrolle 16 unterhalb der Umkehrrolle 4 liegt. Bei Annäherung der Dosen 7 an die Umkehrrolle 4 ist die magnetische Haftung der Dosen 7 am Förderband 2 aufgehoben, so daß die nunmehr gewendeten Dosen 7 auf das in Pfeilrichtung R laufende Obertrum des den Abführförderer bildenden Förderbandes 15 abgesetzt und von diesem auf dem Kopf stehend in Pfeilrichtung weiterbefördert werden.

Bei der Ausführungsform nach Fig. 2 besteht die Zuführvorrichtung 10 ebenfalls aus einem kontinuierlich umlaufenden Förderband 12, dessen Umkehrrolle 13 hier aber in Höhe der Umkehrrolle 3 des Wendeförderers 1 im Abstand vor diesem angeordnet ist, wobei zwischen den beiden Umkehrrollen 3 und 13 eine den Spalt überbrückenden Zwischenplatte 17 angeordnet ist, über die hinweg die zu wendenden Gegenstände 7, hier z.B. Dosendeckel, dem Wendeförderer 1 bzw. dem Bandtrum 2' seines Förderbandes 2 zum Weitertransport und zum Wenden zugeführt werden.

Nach Fig. 4 ist der Wendeförderer 1 als Saugbandförderer ausgebildet, wobei die die Gegenstände 7 an dem endlos umlaufenden Förderband 2 bzw. dessen Bandtrum 2' fixierende Haltevorrichtung von einem zwischen den beiden Bandtrumen 2' und 2'' des Förderbandes 2 angeordneten, z.B. im Querschnitt flach-rechteckigen Vakuumrohr 18 gebildet ist, das dem gewendelten Verlauf des Bandtrums 2' eng angepaßt und an seiner dem Bandtrum 2' zugewandten Seite mit Ansaugöffnungen 19 versehen ist. Das Förderband 2, das sich mit seinem fördernden Bandtrum 2' dicht über die Fläche des Vakuumrohrs 18 hinwegbewegt, weist zur Übertragung der Saugkraft auf die Gegenstände 7 Ansaugöffnungen bzw. Durchbrechungen auf. Bei dieser Ausführungsform des Wendeförderers werden daher die Gegenstände 7 auf der Transport- und Wendestrecke durch die Wirkung des in dem Vakuumrohr 18 erzeugten Unterdrucks am Förderband 2 in ihrer Lage fixiert und ebenfalls wie bei dem vorbeschriebenen Magnetbandförderer in der gewendeten Lage der Abführvorrichtung 11 übergeben.

Die Verwendung eines Saugbandförderers für den Wendeförderer 1 empfiehlt sich vor allem dann, wenn die zu wendenden Teile 7 aus einem nicht-ferromagnetischen Material bestehen. Allerdings kann der Saugband- bzw. Vakuumförderer aber auch für das Wenden von ferromagnetischen Teilen Verwendung finden. Es ist im übrigen erkennbar, daß der Wendeförderer mit hoher Fördergeschwindigkeit arbeiten kann. Der Wendeförderer ist daher für alle geförderten Linienleistungen verwendbar.

Aus den Fig. 1 und 3C ist erkennbar, daß die beiden Bandtrume 2' und 2'' des in sich verdrehten Förderbandes 2 in ihrem Kreuzungsbereich, d.h. in der Mitte zwischen den Umkehrrollen 3 und 4 im wesentlichen vertikal stehen und daher im Kreuzungsbereich berührungslos aneinander vorbeigeführt werden können. Es kann sich empfehlen, die Umkehrrollen 3 und 4 mit Seitenführungen für das Förderband 2 zu versehen. Letzteres besteht zweckmäßig aus einem flexiblen Gurtband oder Riemen, kann aber auch z.B. von einem Gewebeband od.dgl. gebildet sein. Selbstverständlich besteht auch die Möglichkeit, die zu wendenden Gegenstände 7 über die Zuführvorrichtung 10 dem Untertrum 2'' des Förderbandes 2 zuzuführen, wobei die Gegenstände 7 an der Umlenkrolle 4 im Obertrum der Abführvorrichtung 11 zugeführt werden. Das Förderband 2 läuft dann in entgegengesetzte Richtung um. Auch kann der Wendeförderer 1 statt in Horizontalanordnung, wie in Fig. 1 gezeigt, mit Neigung in Förderrichtung angeordnet werden.

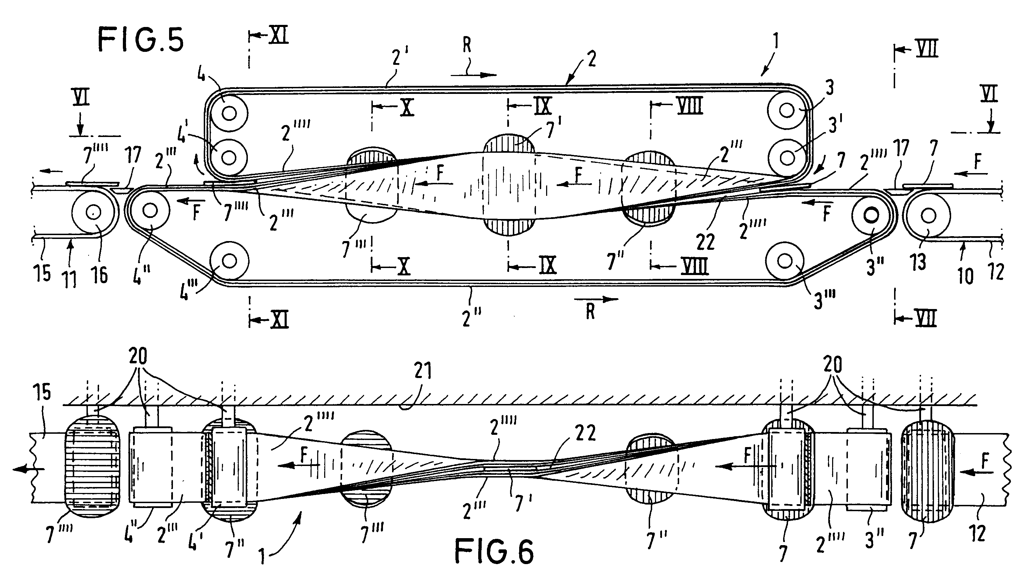

Die Wendeeinrichtung nach den Fig. 5 bis 11 weist einen Wendeförderer 1 in Gestalt eines Klemmwendeförderers mit einem angetriebenen endlosen flexiblen Förderband 2 auf, das an der Aufgabeseite des Klemmwendeförderers über zwei Umlenkrollenpaare mit den Umlenkrollen 3, 3' und 3'' und 3''' und an der Austragsseite des Klemmwendeförderers über zwei Umlenkrollenpaare mit den Umlenkrollen 4, 4' und 4'', 4''' schleifenförmig umgelenkt ist, wobei mindestens eine der Umlenkrollen vom nicht-dargestellten Förderbandantrieb angetrieben wird. Der Klemmwendeförderer ist im gezeigten Ausführungsbeispiel als Horizontalförderer ausgeführt, wobei die Umlenkrollen 3, 3', 3'', 3''' an der Aufgabeseite und entsprechend die Umlenkrollen 4, 4', 4'', 4''' an der Austragsseite im Abstand übereinander angeordnet sind. Das über das genannte Umlenkrollensystem schleifenförmig umgelenkte endlose Förderband 2 bildet hier vier übereinander angeordnete Bandtrume, nämlich die beiden äußeren rücklaufenden Bandtrume 2' und 2'' und die beiden innenliegenden fördernden Bandtrume 2''' und 2'''', die auf der Transportstrecke zwischen den Umlenkrollen 3' und 4' gemeinsam einen Klemmtransportspalt 22 bilden. Die Laufrichtung der rücklaufenden Bandtrume 2' und 2'' ist durch die Pfeile R angegeben, die Laufrichtung der fördernden Bandtrume 2''' und 2'''' dagegen durch die Pfeile F. Die Laufrichtung F entspricht der Transportrichtung.

Demgemäß läuft das endlose Förderband 2 mit seinem Bandtrum 2'''' von der aufgabeseitigen Umlenkrolle 3'' in Förderrichtung F zu der unteren Umlenkrolle 4' des oberen Rollenpaares 4, 4', läuft hier vertikal nach oben über die Umlenkrolle 4 und wird an dieser als rücklaufendes Bandtrum 2' in Rücklaufrichtung R umgelenkt. Im Bereich der Aufgabeseite des Klemmwendeförderers läuft dann das rücklaufende Bandtrum 2' über die obere Umlenkrolle 3 zu der vertikal darunter befindlichen Umlenkroll 3', wird an dieser in Förderrichtung F umgelenkt und läuft als Bandtrum 2''' über die Transport- und Wendestrecke hinweg in Förderrichtung F zu der austragsseitigen oberen Umlenkrolle 4'' des unteren Umlenkrollenpaares 4'', 4''' und wird hier über die Umlenkrolle 4''' als rücklaufendes Bandtrum 2'' in Pfeilrichtung R zur Aufgabeseite des Klemmwendeförderers zurückgeführt, wo es über die Umlenkrollen 3''' und 3'' wieder in die Förderrichtung F umgelenkt wird. Bei dieser schleifenförmigen Führung des endlosen Förderbandes 2 sind die beiden innenliegenden benachbarten Bandtrume 2''' und 2'''' zwischen den Umlenkrollen 3' und 4'' bzw. 3'' und 4' jeweils gleichsinnig zueinander um 180° in ihrer Längsrichtung in sich verdreht, so daß zwischen diesen beiden gleichsinnig und synchron in Förderrichtung F laufenden Bandtrume 2''' und 2'''' auf der Strecke zwischen den Umlenkrollen 3', 4'' bzw. 3'', 4' ein gewendelter Klemmtransportspalt 22 gebildet wird, in dem die zu wendenden Gegenstände auf der Transport- und Wendestrecke, also zwischen der Aufgabeseite und Austragsseite des Klemmwendeförderers um 180° gewendet und während des Transport- und Wendevorgangs mit Klemmung sicher gehalten werden. An der Aufgabe- und Austragsseite des Wendeförderers 1 sind die Umlenkrollen 3, 3' bzw. 4, 4' des jeweils oberen Klemmrollenpaares vertikal übereinander angeordnet, während die Umlenkrollen 3'' und 3''' bzw. 4'', 4''' einerseits vertikal übereinander und andererseits in Transportrichtung F zueinander versetzt sind. Dabei ist die Umlenkrolle 3'' an der Aufgabeseite des Klemmwendeförderers gegenüber der Umlenkrolle 3' entgegen der Transportrichtung F zurückversetzt und die Umlenkrolle 4'' an der Austragsseite des Klemmwendeförderers ist gegenüber der Umlenkrolle 4' in Transportrichtung F vorgesetzt. Der Abstand der Umlenkrollen 3'', 4'' ist demgemäß größer als derjenige der darüber angeordneten Umlenkrollen 3', 4'.

Bei dem vorstehend beschriebenen Klemmwendeförderer bestehen die um 180° zu wendenden Gegenstände 7 aus Dosendeckeln, die hier eine ovale Umrißform aufweisen, jedoch auch aus Runddeckeln bestehen können. Die Zuführung der zu wendenden Dosendeckel 7 zu dem Wendeförderer 1 erfolgt mit Hilfe der an dessen Aufgabeseite angeordneten Zuführvorrichtung 10 in Gestalt eines Aufgabeförderers, der hier aus einem endlosen angetriebenen Zuführband 12 besteht, dessen austragsseitige Umlenkrolle 13 höhengleich in Transportrichtung F vor der Umlenkrolle 3'' angeordnet ist, die ihrerseits zu der austragsseitigen Umlenkrolle 4'' höhengleich gelagert ist. Die Abführung der gewendeten Dosendeckel 7 von dem Klemmwendeförderer in dessen Austragsbereich erfolgt mit Hilfe der Abführvorrichtung 11 in Gestalt eines Abführförderers, der vorzugsweise ebenfalls aus einem angetriebenen endlosen Förderband 15 besteht, dessen Umlenkrolle 16 höhengleich zu der Umlenkrolle 4'' angeordnet ist. Der Aufgabeförderer und der Abführförderer liegen daher mit den fördernden Bandtrumen 2''' und 2'''', die gemeinsam den gewendelten Klemmtransportspalt 22 bilden, in einer gemeinsamen Höhenlage. Jeweils zwischen den Umlenkrollen 3'' und 13 bzw. 4'' und 16 kann eine den Spalt überbrückende Zwischenplatte 17 od.dgl. angeordnet sein, über die die Dosendeckel 7 bei der Zuführung auf den Wendeförderer 1 bzw. bei ihrem Austrag von diesem hinweggleiten.

Wie die Fig. 6 bis 11 zeigen, können die Umlenkrollen 3 bis 3''' an der Aufgabeseite und die Umlenkrollen 4 bis 4''' an der Austragsseite des Klemmwendeförderers mit ihren Achsen 20 fliegend an einer vertikalen Rollenhalterung 21 gelagert sein, die z.B. von einer Vertikalwand oder von Vertikalstützen od.dgl. gebildet ist.

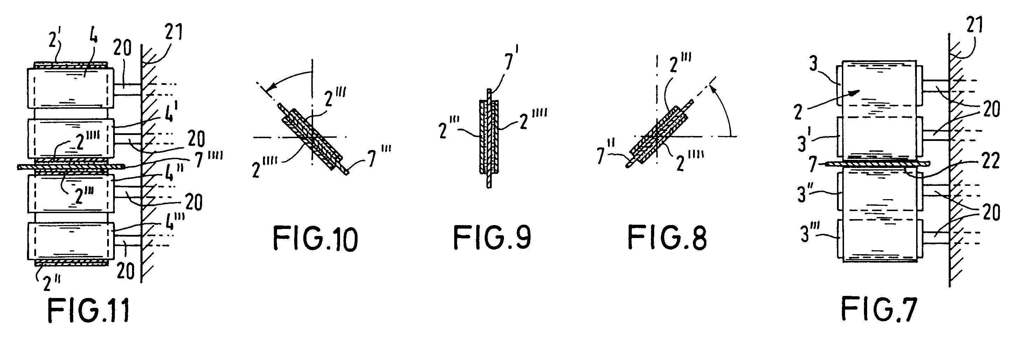

Im Betrieb der Wendeeinrichtung nach den Fig. 5 bis 11 werden die zu wendenden Dosendeckel 7 auf dem Förderband 12 der Zuführvorrichtung 10 flach liegend in rascher Taktfolge dem vorgesetzten fördernden Bandtrum 2'''' des Klemmwendeförderers zugeführt. Sie gelangen dann im Bereich der Umlenkrolle 3' in den gewendelten Klemmtransportspalt 22, der von den beiden gleichsinnig in sich um 180° verdrehten und synchron in Transportrichtung F laufenden Bandtrumen 2''' und 2'''' des endlosen Förderbandes 2 gebildet wird. Die in den Klemmtransportspalt 22 im Bereich der Umlenkrolle 3' einlaufenden Dosendeckel 7 werden zwischen den beiden Bandtrumen 2''' und 2'''' eingeklemmt und somit unter Klemmung über die Transport- und Wendestrecke vom endlosen Förderband 2 zur Austragsseite hin mitgenommen, wobei sie aufgrund der Verdrehung der beiden Bandtrume 2''' und 2'''' um 180° gewendet werden und schließlich in der Wendelage im Bereich der Umlenkrolle 4' aus dem Klemmtransportspalt 22 herauslaufen und über die Umlenkrolle 4'' dem Abführförderer bzw. den ihn bildenden Förderband 15 übergeben werden. Das Wenden der Dosendeckel 7 auf der Transport- und Wendestrecke erfolgt auch hier kontinuierlich. In der Mitte des Klemmtransportspaltes 22, also mittig zwischen den Umlenkrollen 3' und 4', sind die Dosendeckel 7 um 90°, also in ihre Vertikallage, gedreht, wie dies in Fig. 5, 6 und 9 bei 7' gezeigt ist. Im Zwischenbereich zwischen der Umlenkrolle 3' und der Position 7' sind die Dosendeckel um etwa 45° gedreht, wie dies in den Fig. 5, 6 und 8 bei 7'' gezeigt ist. Nach etwa ¾ der Transport- und Wendestrecke sind dagegen die Dosendeckel, wie bei 7''' in Fig. 10 gezeigt, um etwa 135° gegenüber ihrer Ausgangslage beim Einlauf in den Klemmtransportspalt 22 gedreht. Beim Auslauf aus dem Klemmtransportspalt 22 sind schließlich die Dosendeckel um 180° gewendet, wie dies in den Fig. 5, 6 und 11 gezeigt ist. In dieser Wendelage gelangen die Dosendeckel über die Umlenkrolle 4'' hinweg auf den Abführförderer 11.

In der Zeichnung nicht dargestellt ist, daß das endlose Förderband 2 des Klemmwendeförderers auf seiner Auflageseite für die Dosendeckel 7 mit einer nachgiebigen Beschichtung versehen sein kann, um die Klemmung bzw. die klemmende Einspannung der Dosendeckel 7 auf der Transport- und Wendestrecke zwischen den beiden in sich verdrehten Bandtrumen 2''' und 2'''' zu verbessern. Es empfiehlt sich auch, die Umlenkrollen 3', 4' und/oder 3'', 4'' höhenverstellbar anzuordnen, um durch diese Umlenkrollen-Verstellung die Weite des Klemmtransportspaltes 22 zwischen den gewendelten Bandtrumen 2''' und 2'''' in Anpassung an die Höhenabmessung der zu wendenden Gegenstände 7 einstellen zu können.

Es versteht sich, daß auch die vorstehend beschriebene Wendeeinrichtung mit dem Klemmwendeförderer nicht nur zum Wenden von Dosendeckeln, sondern auch zum Wenden anderer scheibenförmiger Elemente oder auch sonstiger Gegenstände, wie vor allem von Dosen u.dgl., verwendbar ist. Der Klemmtransportspalt 22 zwischen den beiden fördernden Bandtrumen 2''' und 2'''' wird dabei selbstverständlich in seiner Weite den Abmessungen der zu wendenden Gegenstände 7 angepaßt. Die beiden fördernden Bandtrume 2''' und 2'''' des endlosen, schleifenförmig über die Umlenkrollen geführten Förderbandes 2 sind mit ihrer gleichsinnigen 180°-Verdrehung parallel zueinander geführt und begrenzen den Klemmtransportspalt 22 auf der Transport- und Wendestrecke. Das endlose Förderband 2 kann vor dem Aufziehen auf die Umlenkrollen nach entsprechenden Verdrehungen mit seinen beiden Stoßenden verbunden, z.B. verschweißt werden. Es kann aber auch nach dem Auflegen auf die Umlenkrollen und nach entsprechender Verdrehung mit seinen Enden verbunden bzw. verschweißt werden. Im übrigen kann der Klemmwendeförderer, statt horizontal, auch vertikal oder in geneigter Lage angeordnet werden.

## Patentansprüche

1. Einrichtung zum Wenden von Gegenständen, wie insbesondere Dosen oder Dosendeckeln, um etwa 180° auf einem Transportweg, **dadurch gekennzeichnet, daß** die Wendeeinrichtung von einem Wendeförderer (1) gebildet ist, dessen endloses Förderband (2) zwischen Umlenkrollen (3, 4; 3 bis 3''', 4 bis 4''') etwa schleifenförmig geführt ist und in seiner Längsrichtung um etwa 180° in sich verdreht ist, wobei dem Förderband (2) eine Haltevorrichtung zur Halterung der Gegenstände (7) an ihm während des Transport- und Wendevorgangs zugeordnet ist.

2. Einrichtung nach Anspruch 1, **dadurch gekennzeichnet, daß** der Wendeförderer (1) aus einem Magentbandförderer oder einem Saugbandförderer besteht, wobei die Haltevorrichtung im Falle eines Magnetbandförderers von einem zwischen den beiden Bandtrumen (2', 2'') des flexiblen Förderbandes (2) angeordneten, vorzugsweise permanentmagnetischen, Magnetsystem (8) und im Falle eines Saugbandförderers von einem zwischen den Bandtrumen (2', 2'') angeordneten, mit Ansaugöffnungen (19) versehenen Vakuumrohr (19) gebildet ist und das Förderband (2) mit zugeordneten Saugöffnungen versehen ist.

3. Einrichtung nach Anspruch 1, **dadurch gekennzeichnet, daß** der Wendeförderer (1) aus einem Klemmwendeförderer mit gleichsinnig in sich um 180° verdrehten und gleichgerichtet von der Aufgabeseite zur Austragsseite laufenden Bandtrumen (2''', 2'''') besteht, die als Haltevorrichtung einen der Klemmhalterung der zu wendenden Gegenstände (7) dienenden Klemmtransportspalt (22) bilden.

4. Einrichtung nach Anspruch 3, **dadurch gekennzeichnet, daß** das endlose Förderband (2) des Klemmwendeförderers (1) zwischen den aufgabeseitigen und austragsseitigen Umlenkrollen (3 bis 3''' bzw. 4 bis 4''') mehrfach schleifenförmig derart umgelenkt ist, daß zwei seiner gleichsinnig in sich verdrehten und gleichgerichtet von der Aufgabeseite zur Austragsseite laufende benachbarte Bandtrume (2''', 2'''') gemeinsam den die zu wendenden Gegenstände (7) mit Klemmung haltenden gewendelten Klemmtransportspalt (22) bilden bzw. begrenzen.

5. Einrichtung nach Anspruch 3 oder 4, **dadurch gekennzeichnet, daß** das endlose Förderband (2) des Klemmwendeförderers (1) an der Aufgabe- und Austragsseite jeweils über im Abstand zueinander angeordnete Umlenkrollen (3 bis 3''' bzw. 4 bis 4''') unter Bildung von vier Bandtrumen (2', 2'', 2''', 2'''') schleifenförmig geführt ist, wobei die beiden benachbarten, innenliegenden Bandtrume (2''', 2'''') zur Bildung des Klemmtransportspaltes (22) jeweils gleichgerichtet zueinander in sich verdreht sind, während die beiden äußeren Bandtrume (2', 2'') von der Austragsseite zur Aufgabeseite des Klemmwendeförderers in Flachlage zurücklaufende Rücklauftrume bilden.

6. Einrichtung nach Anspruch 4 oder 5, **dadurch gekennzeichnet, daß** das endlose flexible Förderband (2) des Klemmwendeförderers (1) an der Aufgabe- und Austragsseite um zwei Umlenkrollenpaare (3, 3', 3'', 3''' bzw. 4, 4', 4'', 4''') geführt ist, wobei die den Klemmtransportspalt (22) definierenden Umlenkrollen (3', 3'' bzw. 4', 4'') in einem kleinerem Abstand zueinander angeordnet sind als die der Umlenkung der rücklaufenden Bandtrume (2', 2'') dienenden Umlenkrollen (3, 3''' bzw. 4, 4''').

7. Einrichtung nach einem der Ansprüche 3 bis 6, **dadurch gekennzeichnet, daß** der Klemmwendeförderer (1) mit seinem endlosen Förderband (2) als Horizontalförderer ausgeführt ist, wobei die Aufgabe für die zu wendenden Gegenstände (7) und der Austrag der gewendeten Gegenstände höhengleich angeordnet sind.

8. Einrichtung nach Anspruch 6 oder 7, **dadurch gekennzeichnet, daß** an der Aufgabeseite des Klemmwendeförderers (1) die untere Umlenkrolle (3''), über die das eine den Klemmtransportspalt (22) bildende Bandtrum (2'''') abläuft, gegenüber der darüber befindlichen Umlenkrolle (3'), über die das andere den Klemmtransportspalt (22) bildende Bandtrum (2''') abläuft, entgegen der Förderrichtung (Pfeil F) vorgesetzt ist.

9. Einrichtung nach einem der Ansprüche 6 bis 8, **dadurch gekennzeichnet, daß** an der Austragsseite des Klemmwendeförderers (1) die untere Umlenkrolle (4''), über die das eine den Klemmtransportspalt (22) bildende Bandtrum (2''') zum rücklaufenden Bandtrum abläuft, gegenüber der darüber befindlichen Umlenkrolle (4'), über die das andere den Klemmtransportspalt (22) bildende Bandtrum (2'''') zum rücklaufenden Bandtrum hin abläuft, in Förderrichtung (Pfeil F) vorgesetzt angeordnet ist.

10. Einrichtung nach einem der Ansprüche 3 bis 9, **dadurch gekennzeichnet, daß** das Förderband (2) auf seiner Auflageseite für die zu wendenden Gegenstände (7) mit einer Beschichtung aus einem nachgiebigen Material, vorzugsweise Schaumstoff oder einem gummiartigen Material, versehen ist.

11. Einrichtung nach einem der Ansprüche 3 bis 10, **dadurch gekennzeichnet, daß** die Weite des Klemmstransportspaltes (22) durch Umlenkrollen-Verstellung einstellbar ist.

12. Einrichtung nach einem der Ansprüche 3 bis 11, **dadurch gekennzeichnet, daß** die Umlenkrollen (3 bis 3''', 4 bis 4''') auf ihren Achsen (20) fliegend gelagert sind.

13. Einrichtung nach einem der Ansprüche 1 bis 12, **dadurch gekennzeichnet, daß** am Aufgabeende des Wendeförderers (1) eine die zu wendenden Gegenstände (7) dem Wendeförderer, vorzugsweise kontinuierlich, zuführende Zuführvorrichtung (10), wie insbesondere ein Zuführband (12) oder ein die zu wendenden Gegenstände (7) am Untertrum hängend transportierender Magnet- oder Saugbandförderer, angeordnet ist.

14. Einrichtung nach einem der Ansprüche 1 bis 13, **dadurch gekennzeichnet, daß** am Übergabeende des Wendeförderers (1) eine die gewendeten Gegenstände (7) übernehmende Abführvorrichtung (11), vorzugsweise in Gestalt eines endlosen Förderbandes (15), angeordnet ist.

15. Einrichtung nach den Ansprüchen 13 und 14, **dadurch gekennzeichnet, daß** die Zuführvorrichtung (10) und die Abführvorrichtung (11) zueinander höhengleich oder höhenversetzt angeordnet sind.
